(19) **Europäisches Patentamt**
**European Patent Office**
**Office européen des brevets**

(11) **EP 2 056 434 B1**

(12) **EUROPEAN PATENT SPECIFICATION**

(45) Date of publication and mention
of the grant of the patent:
**21.10.2009 Bulletin 2009/43**

(51) Int Cl.:
***H02M 3/00*** *(2006.01)*

(21) Application number: **07021329.3**

(22) Date of filing: **31.10.2007**

(54) **Switch-mode power circuit**

Getaktete Leistungsschaltung

Circuit d'alimentation en mode commuté

(84) Designated Contracting States:
**DE FR GB**

(43) Date of publication of application:
**06.05.2009 Bulletin 2009/19**

(73) Proprietor: **Harman Becker Automotive Systems GmbH**
**76307 Karlsbad (DE)**

(72) Inventor: **Knott, Arnold**
**94377 Steinach (DE)**

(74) Representative: **Schmuckermaier, Bernhard**
**Westphal, Mussgnug & Partner**
**Patentanwälte**
**Herzog-Wilhelm-Strasse 26**
**80331 München (DE)**

(56) References cited:
**US-A1- 2007 176 660**

**Description**

BACKGROUND OF INVENTION

1. Field Of Technology

This invention relates to switch-mode power circuits such as, e.g., switch-mode power supplies, switch-mode power amplifiers etc.

2. Related Art

US 2007/0176660 discloses a smps with the features of the preamble of claim 1.
Switch-mode power circuits generate a broad band spectrum due to their high speed signals. Such broad band spectral components can disturb other electronic equipment like receivers used in communication systems. Approaches to lower high frequency signal contents in switch-mode power circuits lead to extensive filter components and shielding. The filter components need to be designed for high voltage and current levels and therefore are bulky, expensive and dissipative. The implementation of shielding is difficult as the mechanical efforts need to be combined with electrical isolation due to different electrical potentials on various conductive elements of power components. This intrinsically leads to trade offs between good thermal and good electrical design and compromises need to be made on both parts of the design.
There is a general need to improve switching power circuits for the reasons outlined above.

SUMMARY

A switch-mode power circuit is disclosed herein that comprises at least one controllable switch that switches a load current dependant on a control signal supplied to the switch, and a control unit connected to the switch and providing the control signal. The control unit comprises a first modulator having an output and being supplied with a first carrier signal and a modulation signal; a second modulator having an output and being supplied with a second carrier signal and the modulation signal; and a logic unit connected to the first and second modulators combining the outputs of the first and second modulator to form a signal representative of the control signal.

BRIEF DESCRIPTION OF THE DRAWINGS

The invention can be better understood with reference to the following drawings and description. The components in the figures are not necessarily to scale, instead emphasis being placed upon illustrating the principles of the invention. Moreover, in the figures, like reference numerals designate corresponding parts. In the drawings:

FIG. 1 is a block diagram of a switch-mode power circuit;

FIG. 2 is a diagram showing a comparison between a single carrier modulated signal and a multi carrier modulated signal;

FIG. 3 is a block diagram of a ORed multi carrier modulator arrangement;

FIG. 4 is a block diagram of a ANDed multi carrier modulator arrangement;

FIG. 5 shows simulation results of ORed MCM with two carriers;

FIG. 6 shows simulation results of ORed MCM with three carriers;

FIG. 7 shows the statistical distribution of ones and zeros in OR and AND operations;

FIG. 8 shows waveforms and spectra of a known single carrier modulation;

FIG. 9 shows waveforms and spectra of an ORed multi carrier modulation;

FIG. 10 shows waveforms and spectra of an ANDed multi carrier modulation;

FIG. 11 is a block diagram of a circuit arrangement that switches after each output pulse between ORed modulation and ANDed modulation;

FIG. 12 shows waveforms and spectra of the two-carrier modulation arrangement of FIG. 11;

FIG. 13 is a block diagram of a circuit arrangement that switches dependant on a master carrier; and

FIG. 14 shows waveforms and spectra of the two-carrier modulation arrangement of FIG. 13.

DETAILED DESCRIPTION

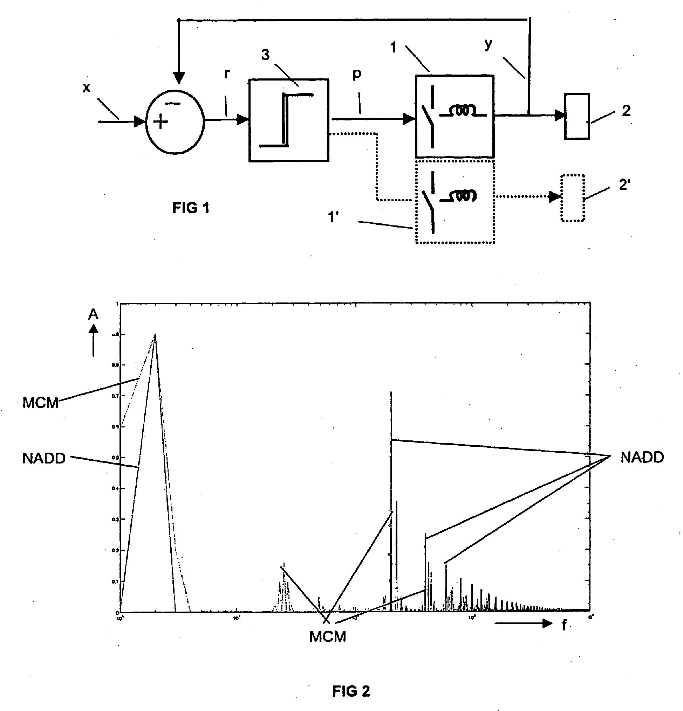

FIG. 1 is a block diagram of a switch-mode power circuit comprising a controllable switch 1 that switches a current through a load 2 dependant on a control signal p supplied to the switch 1 by a control unit 3 connected to the switch 1. The switch 1 may be, e.g., a transistor such as a bipolar transistor or a MOS field effect transistor or the like. Instead of only one switch as shown in FIG. 1 for the sake of simplicity, also an array of switches, e.g. a half bridge or a full bridge arrangement of switches, adequately controlled by the control signal and an inverted control signal may be involved. The load 2 may be a coil of switched power supply, the voice coil of a loudspeaker, an ohmic load provided by a heating element, an other switch-mode power circuit etc. The control unit 3 may comprise a modulator arrangement, e.g., a frequency or pulse width modulator arrangement providing, as signal p, a signal whose frequency or pulse width is dependant on a modulation signal r input into the control unit 3 where $r = a ( y - x )$ with x being a modulation signal and y being a signal (current, voltage) supplied to the load 2 and controlling the switch-mode power circuit. The signal p (or the inverted signal p) may be supplied also to at least one further switch 1' switching a load 2' (or the load 2, e.g., in case of a bridge circuit).

Conventional switch power circuits comprise modulator arrangements using no carrier or only one carrier signal to be, e.g., frequency or pulse width modulated and create high frequency (HF) bands at multiples of the carrier frequency and their sidebands. The arrangements disclosed herein use at least two carriers with different frequencies resulting in multiple HF bands which also may overlap. Such modulator arrangements are referred to as multi carrier modulators (MCM) in the following description. The carriers are fed into different modulators and combined with a reference signal r. To drive a power switch, the outputs of the several modulators are combined to a resulting bit stream. Possible combinations of two or more modulators and their attributes are shown below whereby comparators serve as modulators. In case of more than two modulators, the AND or OR gates may have more than two inputs.

A simple decision rule may be an OR operation or an AND operation of the comparator outputs. The rules for deciding in the time domain whether the output of the modulator arrangement (control unit) is low or high is illustrated in the following equation 1:

```
p = 1 if r < car1 | r < car2

p = 0 else

p = 1 if r < car1 & r < car2

p = 0 else
```

where p is the bit-stream output, r is the reference signal and car1 and car2 are the two carrier signals. However, the arrangement is not limited to two carriers. The directions of the unequations can be changed, resulting in a phase shift of 180°.

FIG. 2 is a diagram illustrating a comparison between a single carrier modulated signal and a multi carrier modulated signal combined with an OR. The modulation signal (in the present case with a frequency f of 2Hz) keeps its full amplitude A while the carriers and its sidebands are half the amplitude A when using multi carrier modulation (MCM) such as an ORed (i.e., combined by an OR operation) multi carrier modulation instead of a single carrier modulation such as a known natural sampled, double side modulated pulse width modulation (NADD). There are twice as much peaks with ORed MCM than with NADD. A further spectral component occurring is the intermodulation between the two carriers and their side bands. This is very beneficial because energy may be put into a band where communication systems available in the market do not operate, e.g., basebands of cellular phones have their cut-off frequencies below this frequency range. The utilization of this out-of-band intermodulation (OIM) band can be adjusted by the distance of the two carriers in frequency and/or the bandwidth around them.

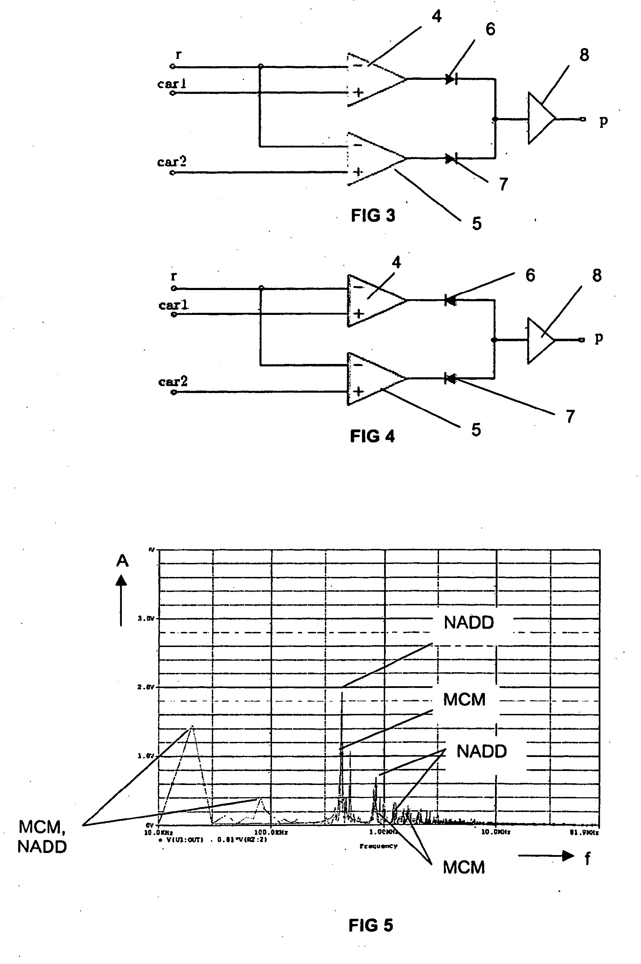

FIG. 3 is a block diagram of a ORed MCM arrangement using comparators 4, 5 as modulators and standard diodes 6, 7 operated as wired OR gate. The comparators each having two inputs and an output where the inputs of each comparator 4, 5 are supplied with the reference signal r and one of the carrier signals car1, car2, respectively. The outputs are OR wired by means of the diodes 6, 7 such that the cathodes of the diodes 6, 7 are connected together forming an output for the control signal p. The arrangement of FIG. 4 differs from the one shown in FIG. 3 only in that the diodes 6, 7 have opposite polarities (i.e., the anodes are connected together) forming an AND gate. If, in the arrangements of FIGS. 3 and 4, the voltage drop across the diodes 6, 7 is disadvantageous, the signal can be retriggered with a driver 8 (e.g., a Schmitt trigger, inverter, comparator, amplifier etc.) connected downstream of the OR gate or AND gate established by diodes 6 and 7. Pull-up or pull down resistors after the diode logic may be applied dependent on the input attributes of the following stage.

The results of a simulation using models.of the particular physical components are shown in FIG. 5 which match the calculation results illustrated in FIG. 2. The signal was retriggered in this simulation as shown in FIGS. 3 and 4. The ORed and ANDed MCM may be extended to N carriers where N is an integer number. For each additional carrier, the peaks of the fundamentals are lowered by a = 1/N while the number of peaks increases by N.

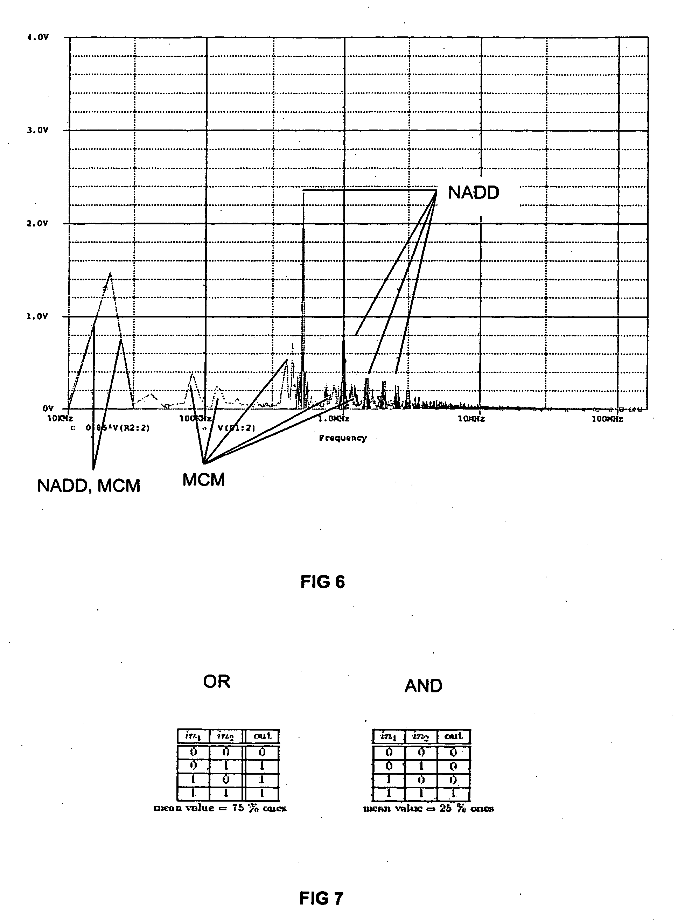

FIG. 6 illustrates the behaviour of a novel switch-mode power circuit when increasing the number of carriers to three. Both, ANDed and ORed MCM, generate a direct current (DC) offset. This offset is resulting from the statistical distribution of highs and lows in the two logical operations shown in the truth tables of FIG 7. Another applicable logic operation is XOR having a 50% occurrence resulting in no DC offset. However, an XOR has 50% redundancy in its truth table due to its symmetry where this symmetry results in a doubling of the frequency of the modulation signal at the output. This is for some applications less desirable. Both, ANDing and ORing MCM have a decent amount of second order total harmonic distortion (THD2nd). For power supplies with low line and load regulation demands, these modulator topologies are adequate, especially due to the low complexity. Amplifiers with low distortion demands and high EMI requirements benefit also from these modulation schemes.

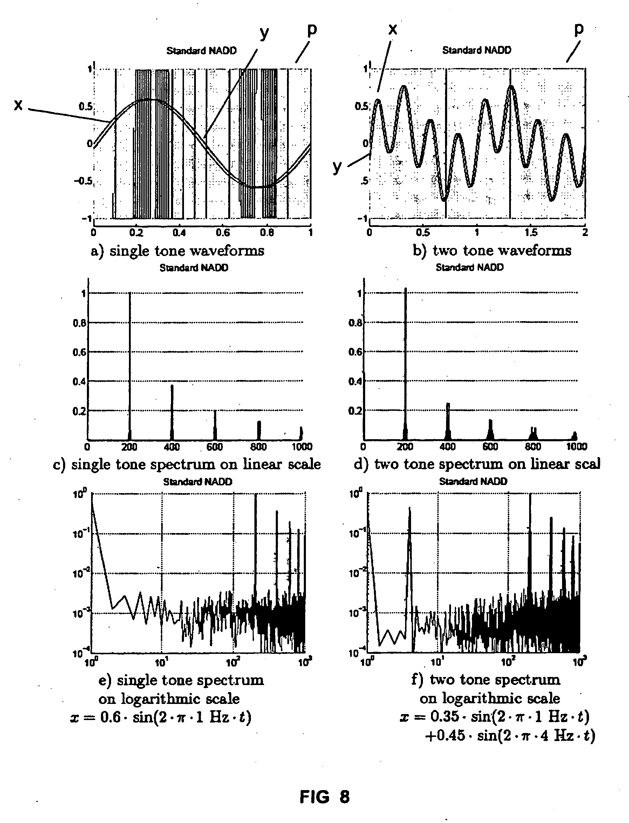

FIG. 8 shows waveforms and spectra of a single carrier modulation. FIG. 8 a) shows the waveforms of signals r, p and y for a sinusoidal stimulation r. FIG 8a c) shows the spectrum of waveform of signals p as shown in FIG. 8 a) on a linear frequency scale. FIG. 8 e) shows the spectrum of waveform of signals p as shown in FIG. 8 a) on a logarithmic scale. FIG. 8 b) shows the waveforms of signals r, p and y for two superimposed sinusoidal stimulations r. FIG. 8 d) shows the spectrum of waveform p as shown in FIG. 8 b) on a linear frequency scale. FIG. 8 f) shows the spectrum of waveform of signals p as shown in FIG. 8 b) on a logarithmic scale. It is desired that, e.g., in the audio band (e.g., 20 Hz - 20kHz, no spectral component occurs other than the reference signal r supplied to the modulator.

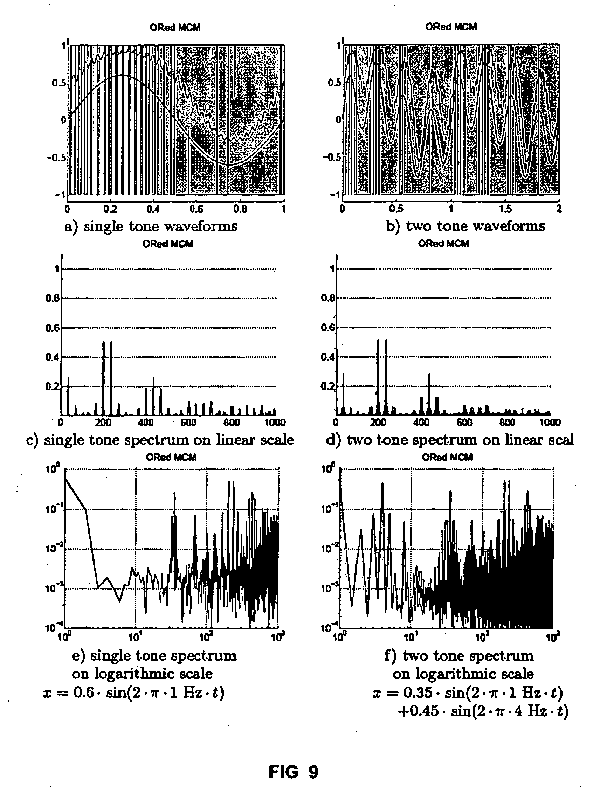

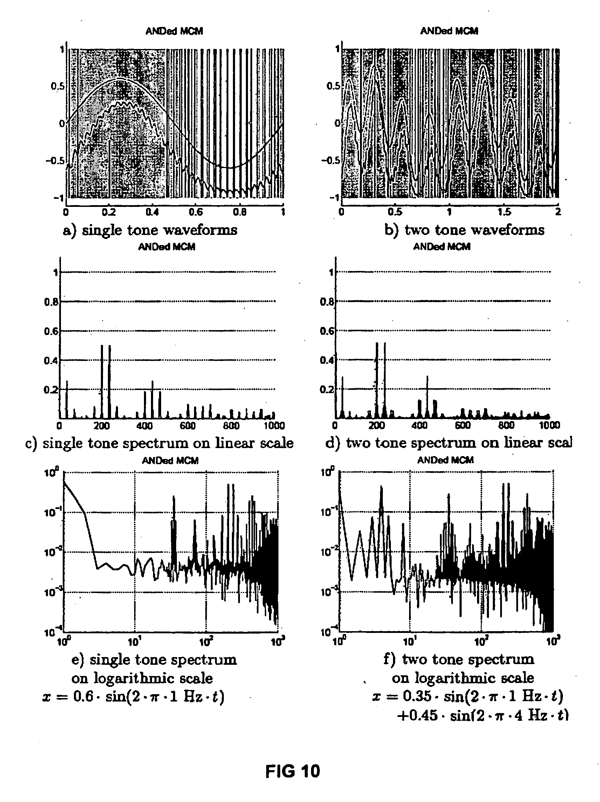

FIGS. 9 und 10 show waveforms and spectra for ANDed and ORed multi carrier modulation, respectively. In the spectrum of the signal p, the frequency of the reference signal r has the same amplitude as in single carrier system, however, the amplitude of higher frequency components is reduced to half.

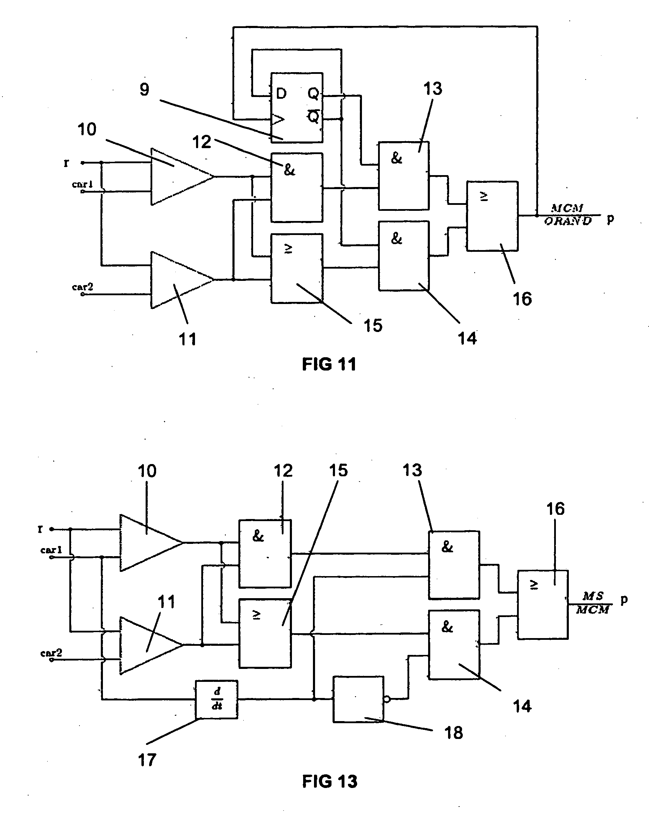

Another approach to cancel the undesired DC effects of ORing and ANDing, as shown above, is to switch after each resulting pulse between the ORed PWM result and the ANDed PWM result. A circuit arrangement implementing this technique is shown in FIG. 11. which is a block diagram of an MCM arrangement using comparators 10, 11 as modulators and standard OR gates 12, 13, 14 and AND gates 15, 16. The comparators 10, 11 each having two inputs and an output where the inputs of each comparator 4, 5 are supplied with the reference signal r and one of the carrier signals car1, car2, respectively. The outputs are fed into an OR gate and into an AND gate by means of gates 12 and 15.

The arrangement of FIG. 11 further comprises a sampling element, having a clock input >, a data input D, an output Q and an inverted output $\overline{Q}$. The data input D of the sample element 9 is supplied with the signal at the inverted output $\overline{Q}$ of the sample element 9. The inputs of AND gate 13 are connected to the outputs of the sampling element 9 and the AND gate 12. The inputs of AND gate 14 are connected to the outputs of the sample element 9 and the OR gate 15. The inputs of OR gate 16 that provides the load signal y are connected to the outputs of the AND gates 13 and 14.

The sampling element 9, e.g., a D-type flip-flop, alternately allows only one of ORed PWM and ANDed PWM to pass. For further lowering of high frequency peaks according to equation 1, ORing and ANDing PWM can have multiple inputs coming from multiple comparators where each of them has its own carrier. Applying an ORANDed MCM causes the DC as well as the second order harmonic distortion THD2nd to vanish, however it rises the third order harmonic distortion THD3rd. Additionally, the gain of such arrangement is higher than 1.

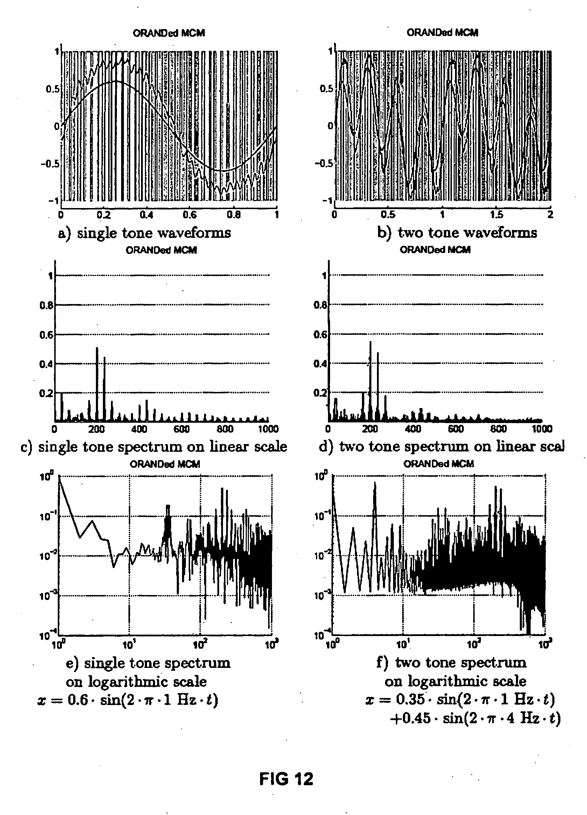

FIG. 12 shows waveforms and spectra of the two-carrier modulation arrangement of FIG. 11. As can be readily seen from FIG. 12, the high frequency peaks are suppressed and the intermodulation frequency is reduced to zero. The side bands with a distance from the carrier that is equal to the frequency of the reference signal r. As there is no DC component in the spectrum, ORANDed MCM can be used for switch-mode power supplies as well as amplifiers or any other kind of PWM driven application. The intermodulations in the audio band (e.g., 20Hz - 20kHz) resulting from, e.g., two sinusoidal carrier signals are reduced so that this type of switch-power circuit can also be used in frequency converter application, for example, to convert a 400 Hz aircraft power supply to a 50Hz or 60Hz in, particularly, audio applications.

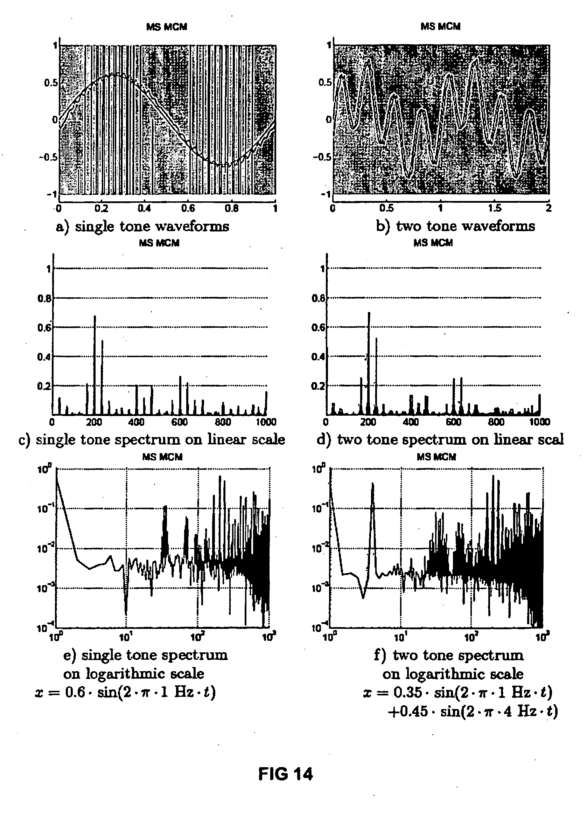

Master-Slave (MS) MCM may include a master carrier and one or more slave carriers where the slope of the master carrier determines whether the ORed MCM or the ANDed MCM is passed into the single bitstream forming the signal p. An example of such arrangement is shown in FIG. 13. The arrangement of FIG. 13 differs from the one shown in FIG. 11 in that the sample element is substituted by a differentiating element that is supplied with carrier car1 (master carrier) and provides a differentiated signal to AND gate 13 and an inverted (by means of an inverter 18), differentiated signal to AND gate 14. Instead of differentiating the carrier signal car1, as shown, a differentiated carrier signal may be used that is supplied to the comparator 10 via an integrator. This arrangement allows for a very high linearity while still lowering the complete out-of-band spectrum as shown in FIG. 14. This arrangement is capable of driving any kind of PWM system, including high-class switch-mode (audio) power amplifiers and power supplies.

The multi carrier modulation lowers the amplitude of the whole spectrum of a switch-mode modulator while keeping the inband performance, uses more frequencies and is very easy to implement therefore it saves cost, space, and complexity in switch-mode power circuits. be obvious to those reasonably skilled in the art that other components performing the same functions may be suitably substituted. Further, the methods of the invention may be achieved in either all software implementations, using the appropriate processor instructions, or in hybrid implementations that utilize a combination of hardware logic and software logic to achieve the same results.

**Claims**

1.   A switch-mode power circuit comprising:

   a controllable switch (1) that switches a load current dependant on a control signal (p) supplied to the switch (1); and
   a control unit (3) connected to the switch and providing the control signal (p); the control unit (3; 10) comprises:

      a first modulator (4; 11) having an output and being supplied with a first carrier signal (car1) and a modulation signal (r);
      a second modulator (5) having an output and being supplied with a second carrier signal (car2) and the modulation signal (r); and **characterized by**
      a logic unit (6, 7; 12, 13, 14, 15, 16) connected to the first and second modulators combining the outputs of the first and second modulator to form a signal representative of the control signal (p).

2.   The switch-mode power circuit of claim 1 where the logic unit (6, 7) provides an OR operation.

3.   The switch-mode power circuit of claim 1 where the logic unit (6, 7) provides an AND operation.

4.   The switch-mode power circuit of claim 1 where the logic unit (12, 13, 14, 15, 16) provides an OR-AND operation.

5.   The switch-mode power circuit of claim 4 where
   the logic unit comprises a first AND gate (12), a first OR gate (15) and a second OR gate (16) each having two inputs and an output;
   the inputs of each the first AND gate (12) and the first OR gate (15) are coupled with the outputs of the modulators (10, 11); and
   the outputs of the first AND gate and the first OR gate are coupled with the input of the second OR gate (16) whose output provides the control signal (p).

6.   The switch-mode power circuit of claim 5 where one of the carrier signals (car1, car2) is a master carrier signal (car1).

7.   The switch-mode power circuit of claim 6 where the master,carrier signal comprises a slope where the output of the first AND gate (12) or the first OR gate (15) is taken as the control signal (p) depending on the slope of the master carrier signal (car1).

8.   The switch-mode power circuit of one of claims 5, 6, sand 7 where
   the logic unit further comprises a second AND gate (13), and a third AND gate (14), each having one or more inputs and an output;
   the second AND gate (13) is supplied with the differentiated master carrier signal and the output of the first AND gate (12);
   the third AND gate (14) is supplied with the inverted differentiated master carrier signal and the output of the first OR gate (15); and
   the second OR gate (16) is connected to the outputs of the second and third AND gates (13, 14), and.provides the control signal (p).

9. The switch-mode power circuit of claim 5 where the control signal (p) comprises pulses and after each pulse the control signal is alternately taken from the first OR gate (15) or the first AND gate (12).

10. The switch-mode power circuit of claim 9 where
the logic unit further comprises a second AND gate (13), a third AND gate (14), and a sample element (9), each having one or more inputs and an output;
one input of the sample element (9) being supplied with the inverted output signal of the sample element (9);
the second AND gate (13) is connected to the noninverted output of the sample element (9) and the first AND gate (12);
the third AND gate (14) is connected to the inverted output of the sample element (9) and the output of the first OR gate (15); and
the second OR gate (16) is connected to the outputs of the second and third AND gates (13, 14), and provides the control signal (p).

11. The switch-mode power circuit of one of claims 1-10 where the modulators (4, 5; 10, 11) comprise comparators each having two inputs and an output, the inputs are supplied with the modulation signal (r) and one of the carrier signals (car1; car2).

12. The switch-mode power circuit of one of claims 1-11 where the modulators (4, 5; 10, 11) are adapted to generate pulse width modulated signals.

13. The switch-mode power circuit of one of claims 1-12 further comprising at least one additional carrier.

14. The switch-mode power circuit of one of claims 1-13 further comprising at least one additional switch (1').

**Patentansprüche**

1. Getaktete Leistungsschaltung, der aufweist:

einen steuerbaren Schalter (1), der in Abhängigkeit von einem in den Schalter (1) eingespeisten Steuersignal (p) einen Laststrom schaltet; und
eine Steuereinheit (3), die mit dem Schalter verbunden ist und das Steuersignal (p) zur Verfügung stellt; wobei die Steuereinheit (3; 10) aufweist:

einen ersten Modulator (4; 11), der einen Ausgang aufweist und der mit einem ersten Trägersignal (car1) und einem Modulationssignal (r) gespeist wird;
einen zweiten Modulator (5), der einen Ausgang aufweist und der mit einem zweiten Trägersignal (car2) und dem Modulationssignal (r) gespeist wird; und **gekennzeichnet durch**
eine Logikeinheit (6, 7; 12, 13, 14, 15, 16), die mit den ersten und zweiten Modulatoren verbunden ist und die Ausgangssignale des ersten und zweiten Modulators kombiniert, um ein Signal zu bilden, das das Steuersignal (p) darstellt.

2. Getaktete Leistungsschaltung nach Anspruch 1, wobei die Logikeinheit eine ODER-Funktion bereitstellt.

3. Getaktete Leistungsschaltung nach Anspruch 1, wobei die Logikeinheit (6, 7) eine UND-Funktion bereitstellt.

4. Getaktete Leistungsschaltung nach Anspruch 1, wobei die Logikeinheit (12, 13, 14, 15, 16) eine ODER-UND-Funktion bereitstellt.

5. Getaktete Leistungsschaltung nach Anspruch 4, wobei die Logikeinheit ein erstes UND-Gatter (12), ein erstes ODER-Gatter (15) und ein zweites ODER-Gatter (16) aufweist, die jeweils zwei Eingänge und einen Ausgang aufweisen;
die Eingänge jeweils des ersten UND-Gatters (12) und des ersten ODER-Gatters (15) mit den Ausgängen der Modulatoren (10, 11) gekoppelt sind; und
die Ausgänge des ersten UND-Gatters und des ersten ODER-Gatters mit dem Eingang des zweiten ODER-Gatters (16) gekoppelt sind, dessen Ausgang das Steuersignal (p) bereitstellt.

6. Getaktete Leistungsschaltung nach Anspruch 5, wobei eines der Trägersignale (car1, car2) ein Hauptträgersignal (car1) ist.

**7.** Getaktete Leistungsschaltung nach Anspruch 6, wobei das Hauptträgersignal eine Flanke aufweist, wobei in Abhängigkeit von der Flanke des Hauptträgersignals (car1) das Ausgangssignal des ersten UND-Gatters (12) oder des ersten ODER-Gatters (15) als das Steuersignal (p) verwendet wird.

**8.** Getaktete Leistungsschaltung nach einem der Ansprüche 5, 6, und 7, wobei
die Logikeinheit weiterhin ein zweites UND-Gatter (13) und ein drittes UND-Gatter (14) aufweist, von denen jedes einen oder mehrere Eingänge und einen Ausgang aufweist;
das zweite UND-Gatter (13) mit dem differenzierten Hauptträgersignal und dem Ausgangssignal des ersten UND-Gatters (12) gespeist wird;
das dritte UND-Gatter (14) mit dem invertierten differenzierten Hauptträgersignal und dem Ausgangssignal des ersten ODER-Gatters (15) gespeist wird; und
das zweite ODER Gatter (16) mit den Ausgängen des zweiten und dritten UND-Gatters (13, 14) verbunden ist und das Steuersignal (p) bereitstellt.

**9.** Getaktete Leistungsschaltung nach Anspruch 5, wobei das Steuersignal (p) Impulse aufweist und das Steuersignal nach jedem Impuls abwechselnd von dem ersten ODER-Gatter (15) oder dem ersten UND-Gatter (12) abgegriffen wird.

**10.** Getaktete Leistungsschaltung nach Anspruch 9, wobei die Logikeinheit zudem ein zweites UND-Gatter (13), ein drittes UND-Gatter (14) und ein Abtastelement (9) aufweist, von denen jedes einen oder mehrere Eingänge und einen Ausgang aufweist;
ein Eingang des Abtastelements (9) mit dem invertierten Ausgangssignal des Abtastelements (9) gespeist wird;
das zweite UND-Gatter (13) mit dem nicht invertierten Ausgang des Abtastelements (9) und dem ersten UND-Gatter (12) verbunden ist;
das dritte UND-Gatter (14) mit dem invertierten Ausgang des Abtastelements (9) und dem Ausgang des ersten ODER-Gatter (15) verbunden ist; und
das zweite ODER-Gatter (16) mit den Ausgängen der zweiten und dritten UND-Gatters (13, 14) verbunden ist und das Steuersignal (p) zur Verfügung stellt.

**11.** Getaktete Leistungsschaltung nach einem der Ansprüche 1 bis 10, wobei die Modulatoren (4, 5; 10, 11) Komparatoren aufweisen, von denen jeder zwei Eingänge und einen Ausgang aufweist und die Eingänge mit dem Modulationssignal (r) und einem der Trägersignale (car1; car2) gespeist werden.

**12.** Getaktete Leistungsschaltung nach einem der Ansprüche 1 bis 11, wobei die Modulatoren (4, 5; 10, 11) angepasst sind, um pulsweitenmodulierte Signale zu erzeugen.

**13.** Getaktete Leistungsschaltung nach einem der Ansprüche 1 bis 12, der zudem zumindest einen zusätzlichen Träger aufweist.

**14.** Getaktete Leistungsschaltung nach einem der Ansprüche 1 bis 13, der zudem zumindest einen zusätzlichen Schalter (1') aufweist.

**Revendications**

**1.** Circuit d'alimentation à découpage comprenant :

un commutateur pouvant être commandé (1) qui commute un courant de charge en fonction d'un signal de commande (p) appliqué au commutateur (1) ; et
une unité de commande (3) connectée au commutateur et fournissant le signal de commande (p) ; l'unité de commande (3: 10) comprenant :

un premier modulateur (4 ; 11) ayant une sortie et recevant un premier signal de porteuse (car1) et un signal de modulation (r) ;
un deuxième modulateur (5) ayant une sortie et recevant un deuxième signal de porteuse (car2) et le signal de modulation (r) ; et **caractérisé par**

une unité logique (6, 7 ; 12, 13, 14, 15, 16) connectée aux premier et deuxième modulateurs combinant les sorties des premier et deuxième modulateurs pour former un signal représentatif du signal de commande (p).

**2.** Circuit d'alimentation à découpage selon la revendication 1, dans lequel l'unité logique (6, 7) réalise une opération OU.

**3.** Circuit d'alimentation à découpage selon la revendication 1, dans lequel l'unité logique (6, 7) réalise une opération ET.

**4.** Circuit d'alimentation à découpage selon la revendication 1, dans lequel l'unité logique (12, 13, 14, 15, 16) réalise une opération OU-ET.

**5.** Circuit d'alimentation à découpage selon la revendication 4, dans lequel
l'unité logique comprend une première porte ET (12), une première porte OU (15) et une deuxième porte OU (16) ayant chacune deux entrées et une sortie ;
les entrées de chacune de la première porte ET (12) et de la première porte OU (15) sont couplées aux sorties des modulateurs (10, 11) ; et
les sorties de la première porte ET et de la première porte OU sont couplées à l'entrée de la deuxième porte OU (16) dont la sortie fournit le signal de commande (p).

**6.** Circuit d'alimentation à découpage selon la revendication 5, dans lequel l'un des signaux de porteuse (car1, car2) est un signal de porteuse maître (car1).

**7.** Circuit d'alimentation à découpage selon la revendication 6, dans lequel le signal de porteuse maître comprend une pente, dans lequel la sortie de la première porte ET (12) ou de la première porte OU (15) est prise en tant que signal de commande (p) en fonction de la pente du signal de porteuse maître (car1).

**8.** Circuit d'alimentation à découpage selon l'une des revendications 5, 6 et 7, dans lequel
l'unité logique comprend en outre une deuxième porte ET (13) et une troisième porte ET (14), ayant chacune une ou plusieurs entrées et une sortie ;
la deuxième porte ET (13) reçoit le signal de porteuse maître différencié et la sortie de la première porte ET (12) ;
la troisième porte ET (14) reçoit le signal de porteuse maître différencié inversé et la sortie de la première porte OU (15) ; et
la deuxième porte OU (16) est connectée aux sorties des deuxième et troisième portes ET (13, 14), et fournit le signal de commande (p).

**9.** Circuit d'alimentation à découpage selon la revendication 5, dans lequel le signal de commande (p) comprend des impulsions et, après chaque impulsion, le signal de commande provenant de la première porte OU (15) ou de la première porte ET (12) est pris alternativement.

**10.** Circuit d'alimentation à découpage selon la revendication 9, dans lequel
l'unité logique comprend en outre une deuxième porte ET (13), une troisième porte ET (14), et un élément d'échantillonnage (9), ayant chacun une ou plusieurs entrées et une sortie ;
une entrée de l'élément d'échantillonnage (9) recevant le signal de sortie inversé de l'élément d'échantillonnage (9) ;
la deuxième porte ET (13) est connectée à la sortie non inversée de l'élément d'échantillonnage (9) et à la première porte ET (12) ;
la troisième porte ET (14) est connectée à la sortie inversée de l'élément d'échantillonnage (9) et à la sortie de la première porte OU (15) ; et
la deuxième porte OU (16) est connectée aux sorties des deuxième et troisième portes ET (13, 14), et fournit le signal de commande (p).

**11.** Circuit d'alimentation à découpage selon l'une des revendications 1 à 10, dans lequel les modulateurs (4, 5 ; 10, 11) comprennent des comparateurs ayant chacun deux entrées et une sortie, les entrées recevant le signal de modulation (r) et l'un des signaux de porteuse (car1 ; car2).

**12.** Circuit d'alimentation à découpage de l'une des revendications 1 à 11, dans lequel les modulateurs (4, 5 ; 10, 11) sont adaptés pour générer des signaux modulés par durée d'impulsion.

**13.** Circuit d'alimentation à découpage selon l'une des revendications 1 à 12 comprenant en outre au moins une porteuse supplémentaire.

**14.** Circuit d'alimentation à découpage selon l'une des revendications 1 à 13, comprenant en outre au moins un commutateur supplémentaire (1').

FIG 1

FIG 2

FIG 3

FIG 4

FIG 5

FIG 6

OR                    AND

| $in_1$ | $in_2$ | out. |
|------|------|------|
| 0 | 0 | 0 |
| 0 | 1 | 1 |
| 1 | 0 | 1 |
| 1 | 1 | 1 |

mean value = 75 % ones

| $in_1$ | $in_2$ | out. |
|------|------|------|
| 0 | 0 | 0 |
| 0 | 1 | 0 |
| 1 | 0 | 0 |
| 1 | 1 | 1 |

mean value = 25 % ones

FIG 7

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \text{ Hz} \cdot t)$

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

FIG 8

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \text{ Hz} \cdot t)$

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

**FIG 9**

ANDed MCM

ANDed MCM

a) single tone waveforms

b) two tone waveforms

ANDed MCM

ANDed MCM

c) single tone spectrum on linear scale

d) two tone spectrum on linear scal

ANDed MCM

ANDed MCM

e) single tone spectrum
on logarithmic scale
$x = 0.6 \cdot \sin(2 \cdot \pi \cdot 1 \text{ Hz} \cdot t)$

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

**FIG 10**

FIG 11

FIG 13

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \ \text{Hz} \cdot t)$

f) two tone spectrum
on logarithmic scale
$x = 0.35 \cdot \sin(2 \cdot \pi \cdot 1 \ \text{Hz} \cdot t)$
$+0.45 \cdot \sin(2 \cdot \pi \cdot 4 \ \text{Hz} \cdot t)$

**FIG 12**

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \text{ Hz} \cdot t)$

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

**FIG 14**

**EP 2 056 434 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070176660 A